# EUROPÄISCHE PATENTSCHRIFT

(11) **EP 2 580 174 B1**
(45) Veröffentlichungstag und Bekanntmachung des Hinweises auf die Patenterteilung: **13.01.2016**
(21) Anmeldenummer: 11723005.2
(22) Anmeldetag: 27.05.2011
(51) Int. Cl.: C05G 3/08, A01N 43/653, A01N 43/56

(54) **MISCHUNG ZUR BEHANDLUNG VON DÜNGEMITTELN**
MIXTURE FOR TREATING FERTILIZERS
MÉLANGE POUR LE TRAITEMENT D'ENGRAIS

(30) Priorität: 08.06.2010 DE 102010022943
(43) Veröffentlichungstag der Anmeldung: 17.04.2013
(73) Patentinhaber: SKW Stickstoffwerke Piesteritz GmbH, 06886 Lutherstadt Wittenberg (DE)
(72) Erfinder: REINHARDT, Petra, 06847 Dessau (DE); RADICS, Ute, 06888 Dabrun (DE); NICLAS, Hans-Joachim, 12435 Berlin (DE)
(74) Vertreter: Schneider, Michael
(86) Internationale Anmeldenummer: PCT/EP2011/002636
(87) Internationale Veröffentlichungsnummer: WO 2011/154100

(56) Entgegenhaltungen:
- WO-A1-95/22515
- WO-A2-2011/015305

## Beschreibung

Weltweit erfolgt die Düngung mit Stickstoff überwiegend mit Hilfe von Harnstoff oder auch Harnstoffmischungen mit anderen Düngerkomponenten wie beispielsweise Ammoniumsulfat.

Die Düngewirkung des Harnstoffs im Ackerboden beruht auf der hydrolytischen Umwandlung vom Harnstoff durch das ubiquitär im Boden vorhandene Enzym Urease zu Ammoniumionen und Hydrogencarbonat. Im biologisch aktiven Boden kann das Ammoniumion unter Einwirkung von Nitrosomas- und Nitrobacter-Bakterien über Nitrit sehr schnell zum Nitrat oxidiert werden.

Durch Nitrifikationsinhibitoren wird die mikrobielle Umwandlung von Ammoniumstickstoff zu Nitratstickstoff im Boden über einen gewissen Zeitraum gehemmt und dadurch eine verbesserte Stickstoffausnutzung durch die Pflanze bewirkt, da das Risiko der Nitratverlagerung deutlich gemindert ist. Gleichzeitig können Lachgasemissionen um über 50 % reduziert werden.

Die Anwendung von mit Nitrifikationsinhibitoren kombinierten Stickstoffdüngern ermöglicht auf Grund ihrer Wirkungsweise sowohl wirtschaftliche als auch ökologische Vorteilseffekte. Infolge der über einen Zeitraum von 4 bis 12 Wochen andauernden Hemmung der mikrobiellen Oxidation des gedüngten Ammoniumstickstoffs zu Nitrat liegt der Stickstoff vorwiegend in Form von Ammonium (für die Pflanzen verfügbar) vor und es werden N-Verluste durch Nitratauswaschung und Lachgasemissionen reduziert. Die Verminderung des Verlustpotenzials erlaubt, verbunden mit gewissen Vorteilen einer ammoniumbetonten Pflanzenernährung, eine Reduzierung des N-Aufwandes bei gleichbleibend hohem Ertragsniveau sowie eine Zusammenlegung von Arbeitsgängen, was zu arbeitswirtschaftlichen Vorteilen führt.

Mit dem Einsatz von N-stabilisierten Düngern kann zur Reduzierung der Stickstoffüberschüsse in der Landwirtschaft beigetragen werden. Dies ist eine umweltpolitische Forderung, der die landwirtschaftliche Produktion zunehmend gerecht werden muss.

Nachweislich wirkt sich der Einsatz von mit Nitrifikationsinhibitoren versehenen Stickstoffdüngemitteln besonders vorteilhaft in Wasserschutzzonen aus, da durch die verzögerte Nitratbildung der Eintrag dieser N-Form in Gewässer erheblich reduziert werden kann.

Als wirksame Nitrifikationsinhibitoren sind eine große Zahl verschiedener Substanzen und Substanzgemische vorgeschlagen worden (siehe u. a. M.E. TRENKEL, Improving Fertilizer Use Efficiency - Controlled-Release and Stabilized Fertilizers in Agriculture; International Fertilizer Industry Assoziation (ifa), Paris Dec. 1997).

Für den praktischen Einsatz als Nitrifikationsinhibitoren eignen sich jedoch aufgrund ihrer chemischen und physikalischen Eigenschaften nur wenige der vorgeschlagenen Substanzen.

So ist Dicyandiamid (DCD) einer der seltenen Wirkstoffe, die ohne Zersetzung in eine Harnstoffschmelze eingebracht werden können (vgl. z. B. EP 0 908 430 B1). Zur Gewährleistung einer sicheren nitrifikationsinhibierenden Wirkung müssen jedoch 3 bis 10 Gew.-% Dicyandiamid in Harnstoff eingearbeitet werden, was einen vergleichsweise hohen Wirkstoffanteil bedeutet.

In DE 44 05 392 C1 werden Wirkstoffkombinationen zur Hemmung bzw. Regelung der Nitrifikation beschrieben, mit denen es gelingt, den mit Dicyandiamid als Einzelsubstanz erforderlichen Wirkstoffgehalt um bis zu 80 % zu senken. Ein erfolgreich in der Industrie umgesetztes Beispiel ist die synergistisch wirkende Kombination von Dicyandiamid mit 1H-1,2,4-Triazol.

Die in DE 103 42 551 offenbarte Herstellung eines Feststoffdüngers aus Harnstoff oder Harnstoff/Ammoniumsulfat mit einem Nitrifikationsinhibitorgemisch aus Dicyandiamid und 1,2,4,-Triazol im Gewichtsverhältnis 10 : 1 ist ein technologisch anspruchsvoller Prozess und setzt sowohl das Vorhandensein der erforderlichen Anlagen als auch des entsprechenden Know-hows voraus. Das Dicyandiamid wird dabei in der Schmelze mit dem Harnstoff granuliert und das 1,2,4-Triazol abschließend als konzentrierte wässrige Lösung auf die Granalienoberfläche aufgetragen.

Entsprechend hergestellte sogenannte "stabilisierte Feststoffdünger" finden in der landwirtschaftlichen Praxis eine hohe Akzeptanz, so dass ein weltweiter Bedarf besteht.

Dieser kann zur Zeit nicht gedeckt werden, weil auf der einen Seite der Transport dieser Düngemittel über eine weite Distanz ökonomisch nicht sinnvoll ist und auf der anderen Seite für eine Produktion vor Ort aufgrund der oben genannten Voraussetzungen Spezialanlagen erforderlich sind.

Aus diesem Grund bestand die Aufgabe, eine die Nitrifikation hemmende Mischung zu entwickeln, die zur einfachen Behandlung von regional vor Ort erhältlichen ammoniumhaltigen Düngemitteln eingesetzt werden kann und die Herstellung eines stickstoffstabilisierten Düngers ohne besondere technische Anforderungen erlaubt. Dabei sollten möglichst hochwirksame Nitrifikationsinhibitoren mit guter Umweltverträglichkeit eingesetzt werden.

Die Aufbringung des Nitrifikationsinhibitorgemisches Dicyandiamid und 1,2,4-Triazol 10 : 1 als Puder auf die Oberfläche von Harnstoff-Granulaten weist die bereits von der DCD-Soloanwendung her bekannten Mängel auf. So haften die Feststoffe nicht fest auf der Oberfläche, was bei der Handhabung des Düngemittels zu lästigem Abrieb und Stauben führt. Die in der DE-OS 36 01 805 und der DE-OS 25 31 962 für DCD beschriebenen Verfahren unter Einsatz von zusätzlichen Haftvermittlern würden die Anwendung des Wirkstoffgemischs verkomplizieren und verteuern. Für die Applikation als wässrige Formulierung ist die Löslichkeit von Dicyandiamid mit 32 g/l viel zu gering.

Die Inhibitorkombination aus 1,2,4-Triazol (TZ) und 3-Methylpyrazol (3-MP) zeichnet sich durch günstigere physikochemische Eigenschaften und durch eine verstärkte Wirksamkeit aus, so dass es von Vorteil wäre, 3-Methylpyrazol anstelle von Dicyandiamid einzusetzen. Das flüssige 3-Methylpyrazol weist allerdings eine so hohe Flüchtigkeit auf, dass sich beim Aufbringen sogar bei einer niedrigen Temperatur und auch bei der Lagerung des damit beschichteten Düngemittels merkliche Anteile des 3-Methylpyrazols verflüchtigen, was zu Verlusten an Wirkstoff, aber auch zu Beeinträchtigungen der Umwelt führt. Aus diesem Grund wird diese Kombination großtechnisch bisher nur in flüssigen Düngesystemen angewendet.

In DE 41 28 828 wird das Aufbringen von einem Salz aus 3-Methylpyrazol und einer Säure zur Herstellung von harnstoffhaltigen festen Düngemitteln beschrieben. Die Salzbildung soll den Wirkstoff auf dem Harnstoff fixieren. Unter Einfluss von Luftfeuchtigkeit wird jedoch insbesondere bei einer Kombination mit Harnstoff das leichtflüchtige Pyrazol wieder freigesetzt, so dass noch eine Wachsschicht als zusätzlicher Schutz gegen die Verflüchtigung des Nitrifikationsinhibitors aufgetragen werden muss. EP 1 340 738 und EP 1 323 695 offenbaren ebenfalls die Herstellung von festen harnstoffhaltigen Düngemitteln mit Nitrifikationsinhibitoren durch das Aufbringen von Pyrazolen als Salzlösungen oder Salz-Suspensionen. Dafür sind entweder spezielle technische Voraussetzungen beim Mischen (EP 1 340 738) notwendig oder Temperaturen von 70 bis 130 °C erforderlich. Letztere müssen jedoch für 3-Methylpyrazol-haltige Mischungen aufgrund der Flüchtigkeit von 3-MP ausgeschlossen werden.

Mit dem gleichen Mangel ist auch die Patentanmeldung DE 10 2009 036229 behaftet, in der ein Antibackmittel, enthaltend einen Polyvinylalkohol, ein Tensid und mindestens einen Nitrifikationsinhibitor, offenbart wird. Auch hier werden die Düngemittelgranulate nach der Behandlung mit dem Antibackmittel auf bis zu 50 °C erwärmt, was einen hohen 3-MP-Verlust zur Folge hätte.

Da die bisher vorgeschlagenen Methoden zur Anwendung von Nitrifikationsinhibitoren auf festen Düngemitteln für den praktischen Einsatz des Wirkstoffgemischs Triazol(TZ)/3-MP nicht brauchbar sind, bestand die Aufgabe, eine TZ/MP enthaltende Mischung zu entwickeln, die zur einfachen Behandlung von regional vor Ort erhältlichen harnstoffbasierten bzw. ammoniumhaltigen Düngemitteln eingesetzt werden kann und die Herstellung eines stickstoffstabilisierten Düngers ohne besondere technische Anforderungen erlaubt.

Die Aufgabe wird erfindungsgemäß gelöst, indem eine wie in Patentanspruch 1 definierte wässrige Lösung, die mindestens einen Polyvinylalkohol und Polyvinylpyrrolidon, 1,2,4-Triazol, 3-Methylpyrazol (3-MP) sowie ein Tensid enthält, verwendet wird.

Es hat sich nämlich gezeigt, dass das hochwirksame Nitrifikationsinhibitorgemisch enthaltend 1,2,4-Triazol, 3-Methylpyrazol (3-MP) im Gewichtsverhältnis 2/1 zubereitet mit Polyvinylalkohol und Polyvinylpyrrolidon als wässriges Konzentrat auf harnstoffbasierte bzw. ammoniumhaltige Feststoffdünger mit einfachen Mitteln applizierbar ist.

Überraschenderweise wird das als flüchtig bekannte 3-Methylpyrazol auf den Granalien für mehrere Wochen fixiert, wie in entsprechenden Lagerversuchen nachgewiesen wird.

Die Kombination von Polyvinylalkohol (PVA) mit dem Formulierungshilfsmittel Polyvinylpyrrolidon (PVP) bewirkt die Fixierung des flüchtigen 3-Methylpyrazols auf dem Düngemittel.

Die Erfindung betrifft ferner das in Patentanspruch 9 definierte Verfahren zur Herstellung der erfindungsgemäßen Mischung und das in Anspruch 11 angegebene Verfahren zur Behandlung von harnstoffbasierten bzw. ammoniumhaltigen Düngemitteln mit der erfindungsgemäßen Mischung.

Weitere bevorzugte und/oder vorteilhafte Ausführungsformen sind Gegenstand der Unteransprüche.

Ohne sich auf eine Theorie festlegen zu wollen, wird vermutet, dass über die Wechselwirkung der OH-Gruppen des Polyvinylalkohols die Haftung auf den polaren Düngemittelgranulaten realisiert wird, während PVP aufgrund der sehr polaren Struktur der Pyrrolidoneinheiten in der Lage ist, starke Wasserstoffbrücken auszubilden und auf diese Weise die Azole über deren NH-Gruppe binden kann.

Der Zusatz eines oberflächenaktiven Stoffes (Tensides) verbessert die Antibackwirkung und außerdem die Verteilung der viskosen Flüssigkeit auf dem Düngemittel.

Die Aufbringung der hochkonzentrierten Nitrifikationsinhibitorzubereitung erfolgt durch Besprühen des in einem Mischer rotierenden Düngemittels bei Umgebungstemperatur. Es sind weder ein Vorwärmen der Granulate noch eine abschließende Trocknung erforderlich.

Das mit Nitrifikationsinhibitor versehene Düngemittel kann sofort ausgebracht werden. Bei Bedarf kann es aber auch einige Wochen als loses Schüttgut in einer Halle gelagert werden.

Die Mischung zur Behandlung von Düngemitteln, enthaltend 1,2,4-Triazol/3-Methylpyrazol, Polyvinylalkohol, Polyvinylpyrrolidon und Tensid in Wasser, ist über einen langen Zeitraum stabil. Dies bezieht sich auch auf Temperaturen bis -15 °C.

In der erfindungsgemäßen Mischung zur Behandlung von Düngemitteln werden bevorzugt Polyvinylalkohole mit einer Viskosität der 4%igen wässrigen Lösung von 2 bis 5 mPas und einem Hydrolysegrad von 90 bis 100 % eingesetzt. Die Fixierung des 3-Methylpyrazols auf dem Düngemittel durch die Kombination von Polyvinylalkoholen mit Polyvinylpyrrolidon nimmt mit zunehmendem Hydrolysegrad des Polyvinylalkohols zu. Deshalb sind als erfindungsgemäß verwendete Polyvinylalkohole solche mit einem Hydrolysegrad von über 95 % besonders bevorzugt.

Polyvinylpyrrolidon wird erfindungsgemäß in Mengen von 0,1 bis 5 % zugesetzt. Dabei kann Polyvinylpyrrolidon mit den handelsüblichen Molmassen 2.000 bis 40.000 g/mol verwendet werden. Die Auswahl erfolgt in Anpassung an die Eigenschaften des eingesetzten Polyvinylalkohols in der Weise, dass sich eine Viskosität der erfindungsgemäßen Mischung von < 400 mPas (20 °C) einstellt.

Als Tenside können in der erfindungsgemäßen Mischung kationische, anionische oder nichtionische Substanzen oder ein Gemisch verschiedener oberflächenaktiver Stoffe enthalten sein. Bevorzugt wird ein Ester zwischen einer Fettsäure und Polyoxyethylensorbitan verwendet, wobei die Fettsäuren bevorzugt Laurin-, Palmitin-, Stearin- und Ölsäure umfassen.

Die erfindungsgemäße Mischung zur Behandlung von Düngemitteln hat z. B. folgende Zusammensetzung:
5 bis 20 % Polyvinylalkohol
0,1 bis 5 % Polyvinylpyrrolidon
20 bis 55 % 1,2,4-Triazol/3-Methylpyrazol im Verhältnis 2:1
0,1 bis 3 % Tensid
25 bis 65 % Wasser

Die wässrige Lösung der erfindungsgemäßen Mischung zur Behandlung von ammoniumhaltigen Düngemitteln wird in einer Menge von 0,1 bis 0,9 % bezogen auf das Gewicht des Düngemittels appliziert.

Als Düngemittel können alle bekannten harnstoff- und ammoniumhaltigen Dünger eingesetzt werden.

Die vorliegende Erfindung soll nun anhand der folgenden Beispiele ohne Beschränkung und somit lediglich zur Veranschaulichung erläutert werden.

### Beispiel 1

### Laboransatz zur Herstellung eines Nitrifikationsinhibitor-Konzentrates

Im Doppelmantelrührgefäß aus Glas mit Flügelrührer und Rückflusskühler werden 112 g Wasser (Deionat) und 2 g eines nichtionischen Tensides, vorzugsweise Polysorbat 80, bei Raumtemperatur vorgelegt. In diese Lösung werden unter Rühren 24 g Polyvinylalkohol (PVA), beispielsweise 3-85, gegeben. Danach setzt man der Mischung 2 g Polyvinylpyrrolidon (PVP 10, CAS 9003-39-8) zu. Zu dieser Mischung werden 40 g 1,2,4-Triazol gewogen. Das Gemisch wird unter Rühren auf ca. 45 °C erwärmt und 2 Stunden bis zum völligen Lösen bei 45 °C gehalten. Anschließend wird die Lösung auf 25 °C bis 30 °C abgekühlt. In dieser Lösung werden 20 g 3-Methylpyrazol unter Rühren gelöst.

Für die praktische Anwendung sind generell Zubereitungen mit einem möglichst hohen Wirkstoffanteil erwünscht, um den Anteil von unwirksamem Trägermaterial bei Verpackung und Transport niedrig zu halten. So ist es möglich, wie Beispiel 2 bis Beispiel 4 zeigen, den Gehalt von 1,2,4-Triazol und 3-Methylpyrazol in der Zubereitung auf z. B. 45 % zu erhöhen.

### Beispiel 2

### Laboransatz zur Herstellung eines Nitrifkationsinhibitor-Konzentrates

Im Doppelmantelrührgefäß aus Glas mit Flügelrührer und Rückflusskühler werden 84 g Wasser (Deionat) und 2 g eines nichtionischen Tensides, vorzugsweise Polysorbat 80, bei Raumtemperatur eingewogen. In diese Lösung werden unter Rühren 24 g Polyvinylalkohol (PVA), beispielsweise 4-98, gegeben. Zur Mischung werden 60 g 1,2,4-Triazol eingewogen. Anschließend wird auf 80 °C erwärmt und bis zum vollständigen Lösen 2 h bei 80 °C gerührt. Die Lösung wird auf 25 °C abgekühlt, und zum Schluß werden 30 g 3-Methylpyrazol dazu gegeben.

### Beispiel 3

### Herstellung eines Konzentrates zur landwirtschaftlichen Nutzung

In einem beheizbaren Rührgefäß werden bei Raumtemperatur 81 kg Wasser (Kondensat) und 1,4 kg eines nichtionischen Tensides, z. B. Polysorbat 80, vorgelegt. Unter Rühren werden 24 kg Polyvinylalkohol 3-98 und 4 kg Polyvinylpyrrolidon zugegeben. Anschließend werden 60 kg 1,2,4-Triazol zur Mischung gewogen. Die Lösung wird auf 75 bis 80 °C erwärmt und 2 Stunden bis zur völligen Lösung der Feststoffkomponenten gerührt. Die nunmehr kläre Lösung wird auf 25 bis 30 °C abgekühlt. Zum Schluss werden 30 kg 3-Methylpyrazol in die Lösung eingerührt.

### Beispiel 4

### Herstellung eines Konzentrates zur landwirtschaftlichen Nutzung

In einem weiteren Ansatz werden ebenfalls 85 kg Kondensat und 1,4 kg Polysorbat 80 bei Raumtemperatur in einem Rührgefäß vorgelegt. Unter Rühren werden 16 kg PVA 4-98 und 8 kg PVP zugegeben. Zur Mischung werden 60 kg 1,2,4-Triazol gewogen. Die Mischung muss zum vollständigen Lösen von PVA 4-98 auf 80 °C erwärmt werden und bei dieser Temperatur 2 Stunden gerührt werden. Nach dem Lösen wird auf 30 °C abgekühlt. Zur abgekühlten Lösung werden abschließend 30 kg 3-Methylpyrazol unter Rühren zugegeben.

### Beispiel 5

### Herstellung einer Nitrifikationsinhibitor-Mischung mit 3-Methylpyrazol-Salzen in situ

Das 3-Methylpyrazol bildet mit mineralischen und organischen Säuren Salze. Im Beispiel ist die Umsetzung mit je einer mineralischen und einer organischen Säure angegeben. Die 3-Methylpyrazolsalze werden nicht isoliert, sondern praxisrelevant wird nach der Salzbildung die vollständige Mischung gemäß folgender Vorschrift zubereitet:
In einem handelsüblichen Dreihalsglaskolben werden 100 g Wasser (Deionat) bei Raumtemperatur vorgelegt. Unter Rühren werden in dem Wasser 14,6 g Essigsäure (99 %ig Eisessig) gelöst. Mittels Tropftrichter werden 20 g 3-Methylpyrazol für die Neutralisation zugegeben. Anschließend werden 16 g PVA 4-98 und 8,8 g PVP in die wässrige Lösung eingerührt und auf 80 °C zum Lösen des PVAs erwärmt. Zur Mischung werden dann 40 g 1,2,4-Triazol gegeben und ca. 2 Stunden zum völligen Lösen bei 80 °C gerührt. Zum Schluß kommen 1,4 g Polysorbat 80 zur Lösung.

In gleicher Weise werden 82 g Wasser (Deionat) bei Raumtemperatur vorgelegt und 32,8 g Hydroxybernsteinsäure (Äpfelsäure) gelöst. Der Lösevorgang verläuft endotherm die Temperatur sinkt von 20 °C auf 11 °C. Bei Raumtemperatur werden tropfenweise 20 g 3-Methylpyrazol zugegeben. Anschließend werden PVA 4-98 und PVP bei Raumtemperatur eingerührt und auf 80 °C erwärmt. Zur Mischung werden 40 g 1,2,4-Triazol gegeben und ca. 2 Stunden zum völligen Lösen bei 80 °C gerührt. Zum Schluß kommen 1,4 g Polysorbat 80 zur Lösung.

Die gemäß Beispiel 1 bis 5 hergestellten Nitrifikationsinhibitor-Konzentrate sind lagerstabile Lösungen. Sie können problemlos zu jedem Ort der Anwendung transportiert werden. Sie sind für alle harnstoff- und/oder ammoniumbasierten Feststoffdünger in einfacher Art und Weise verwendbar, wie die folgenden Beispiele zeigen.

### Beispiel 6

### Laboransatz Applikation von Nitrifikationsinhibitor-Mischung auf Harnstoffgranalien

In einem 1000 ml Schraubgefäß werden 500 g granulierter Harnstoff (mittlere Granaliendurchmesser ca. 3,3 mm) eingewogen. Zu diesem ca. 22 °C warmen Harnstoff werden bei Raumtemperatur 2,3 g der Mischung (Beispiel 1) gewogen und gut verteilt, oder die Mischung wird aufgesprüht. Dann wird das verschlossene Gefäß 10 Minuten zur optimalen Verteilung in einem Schüttler bewegt. Anschließend können die stabilisierten Granalien im Gewächshaus auf ihre biologische Wirkung getestet werden. Auch eine entsprechende offene Lagerung kann begonnen werden.

### Beispiel 7

### Behandlung von Harnstoff/Ammoniumsulfat Granalien mit Nitrifikationsinhibitor-Mischung im Labor

Wie im Beispiel 6 erläutert, werden ebenfalls 500 g Granalien, bestehend aus Harnstoff/Ammoniumsulfat im Verhältnis 50 Gew. %/50 Gew. %, bei Raumtemperatur mit 1,1 g einer Mischung nach Beispiel 3 besprüht. Das verschlossene Gefäß wird anschließend 10 Minuten im Schüttler bewegt. Die mit Nitrifikationsinhibitor TZ /MP 2/1 stabilisierten Harnstoff/Ammoniumsulfat-Granalien können sofort zur Düngung verwendet werden. Aber auch eine Lagerung ist möglich.

### Applikation von Nitrifikationsinhibitor-Mischung auf Harnstoffgranalien

### Beispiel 8

In einem handelsüblichen Betonmischer werden bei Umgebungstemperatur (18 °C) 10 kg granulierter Harnstoff mit 37 g der Nitrifikationsinhibitormischung (Beispiel 4) besprüht. Anschließend wird die Mischung noch 30 Minuten im Mischer bewegt. Der stabilisierte Harnstoff-Dünger kann ohne weitere Trocknung oder sonstige Behandlung umgehend ausgebracht werden.

### Beispiel 9

15 kg handelsüblicher granulierter Harnstoff werden in einem Betonmischer bei Umgebungstemperatur (22 °C) bewegt. Auf die bewegten Granalien werden 56 g Nitrifikationsinhibitormischung (Beispiel 3) gesprüht und die Mischung noch 30 Minuten im Mischer bewegt. Der stablisierte Harnstoffdünger kann ohne weitere Trocknung ausgebracht oder auch kurzzeitig in einer Halle gelagert werden.

### Modelluntersuchungen zum Nachweis der Minderung der Flüchtigkeit von 3-Methylpyrazol durch Einbettung in eine Polyvinylalkohol-Polyvinylpyrrolidon-Matrix

**Tabelle 1: Laborversuch zur Flüchtigkeit von 3-Methylpyrazol Lagerung in Kristallisierschalen (Durchmesser 5 cm offen) bei Raumtemperatur**

| Lagerzeit in Tagen | 0,25 g 3-MP | 0,25 g 3-MP + 0,50 g TZ¹ | 0,50 g TZ |
|---|---|---|---|
| | **Verlust in %** | | |
| 1 | 12 | 5 | 0 |
| 2 | 26 | 12 | 0 |
| 3 | 40 | 19 | 1 |
| 6 | 87 | 28 | 2 |
| 12 | 100 | 34 | 2 |

| | | | |
|---|---|---|---|
| ¹ Mischung enthält 33 % 3-MP | | | |

Mit Hilfe von thermogravimetrischen Analysen kann das thermische Verhalten von Stoffen und Stoffmischungen sehr genau untersucht werden. Neben Abbaureaktionen werden auch Verflüchtigungen durch einen Masseverlust nachgewiesen.

Mit der Durchführung dieser Untersuchungen bei etwas erhöhten Temperaturen kann ein Verhalten der Gemische im Zeitraffer simuliert werden und so zum Beispiel für Düngemittel Voraussagen über einen längeren Zeitraum bei normalen Lagertemperaturen getroffen werden.

Für die vorliegenden Modellversuche wurden die Proben nach den Vorschriften der Beispiele 1 bis 5 hergestellt, und für je 50 bis 110 mg der Mischung wird unter thermischer Belastung zwischen 30 °C und 130 °C in der Thermogravimetrie (Gerät von Mettler Toledo, Aufheizrate 1 °C pro Minute) der jeweilige Masseverlust gemessen (siehe Tabelle 2).

**Tabelle 2 Zusammenstellung der Ergebnisse**

| PVA/PVP | Verlust in % (nach 45 min./ 75 °C) | Verlust in % (nach 70 min./ 100 °C) |
|---|---|---|
| PVA | 30 | 40 |
| 2 Teile PVA + 1 Teil PVP | 18 | 33 |
| 6 Teile PVA + 1 Teil PVP | 26 | 34 |

Es wird deutlich, dass die Kombination PVA/PVP am besten geeignet ist, um das flüchtige 3-MP zurückzuhalten.

### Ergebnisse der offenen Lagerung

Die nach Beispiel 8 im Betonmischer umhüllten Harnstoffgranalien wurden in einer Menge von 9 kg zur Simulation der Lagerung in einem Haufwerk in oben offenen zylinderförmigen Gefäßen (Höhe 30 cm, Durchmesser 30 cm) bei Umgebungstemperatur und -feuchte gelagert. Nach einer Lagerzeit von 2, 4 und 6 Wochen wurden Durchschnittsproben entnommen und der Gehalt an den Nitrifikationsinhibitoren TZ/3-MP analytisch bestimmt. Die Ergebnisse sind in der Tabelle 3 zusammengefasst.

**Tabelle 3 Ergebnisse von simulierten Lagerversuchen**

| **Lagerzeit (Wochen)** | **Wirkstoffverluste, bezogen auf den Startwert** | |
|---|---|---|
| | TZ (%) | MP (%) |
| 2 | 0 | 2-5 |
| 4 | 0-1 | 8-10 |
| 6 | 0-3 | 15-20 |
| 6 | - | 89¹ |

| | | |
|---|---|---|
| ¹ Vergleichsversuch: reines 3-Methylpyrazol aufgesprüht | | |

Parallel wurden in gleicher Weise nach Beispiel 9 umhüllte Harnstoffgranalien gelagert und Durchschnittsproben davon analytisch untersucht. Die Ergebnisse sind in der Tabelle 4 zusammengefasst.

**Tabelle 4 Ergebnisse von simulierten Lagerversuchen**

| **Lagerzeit (Wochen)** | **Wirkstoffverluste, bezogen auf den Startwert** | |
|---|---|---|
| | TZ (%) | MP (%) |
| 2 | 0 | 0-3 |
| 4 | 0-1 | 0-8 |
| 6 | 0-3 | 10-15 |
| 6 | - | 89 |

## Patentansprüche

1. Wässrige Lösung einer Mischung zur Behandlung von harnstoffbasierten/ammoniumhaltigen Düngemitteln, die 1,2,4-Triazol und 3-Methylpyrazol im Gewichtsverhältnis 2/1 sowie mindestens einen Polyvinylalkohol, Polyvinylpyrrolidon und ein Tensid enthält.

2. Wässrige Lösung einer Mischung nach Anspruch 1, wobei der Polyvinylalkohol einen Hydrolysegrad von mindestens 90 % aufweist und die Viskosität der 4%igen wässrigen Lösung 2 bis 5 mPas beträgt.

3. Wässrige Lösung einer Mischung nach Anspruch 2, wobei der Polyvinylalkohol einen Hydrolysegrad von mindestens 95 % aufweist und die Viskosität der 4%igen wässrigen Lösung 2 bis 4 mPas beträgt.

4. Wässrige Lösung einer Mischung nach einem der vorstehenden Ansprüche, wobei das Polyvinylpyrrolidon eine Molmasse im Bereich von 2.000 bis 40.000 g/mol aufweist.

5. Wässrige Lösung einer Mischung nach einem der vorstehenden Ansprüche, wobei als Tensid ein Ester einer unter Laurin-, Palmitin-, Stearin- und Ölsäure ausgewählten Fettsäure mit Polyoxyethylensorbitan eingesetzt wird.

6. Wässrige Lösung einer Mischung nach einem der vorstehenden Ansprüche, wobei die Konzentration der Nitrifikationsinhibitoren-Kombination 1,2,4-Triazol und 3-Methylpyrazol im Gewichtsverhältnis 2/1 im Bereich von 20 bis 55 Masseprozent liegt.

7. Wässrige Lösung einer Mischung nach einem der vorstehenden Ansprüche, wobei die Konzentration des Polyvinylalkohols im Bereich von 5 bis 20 Masseprozent, die des Polyvinylpyrrolidons im Bereich von 0,1 bis 5 Masseprozent und die des Tensids im Bereich von 0,1 bis 3 Masseprozent liegt.

8. Wässrige Lösung einer Mischung nach einem der vorstehenden Ansprüche, wobei das 3-Methylpyrazol in Form eines Salzes mit einer Mineralsäure oder einer organischen Säure eingesetzt wird.

9. Verfahren zur Herstellung einer Mischung nach den Ansprüchen 1 bis 7, **dadurch gekennzeichnet, dass** man Wasser vorlegt, nacheinander unter Rühren Tensid, Polyvinylalkohol, Polyvinylpyrrolidon und 1,2,4-Triazol zugibt, die Mischung bis zum vollständigen Lösen des Polyvinylalkohols bei Temperaturen von 40 bis 85 °C rührt und nach dem Abkühlen auf 20 bis 30 °C die Menge an 3-Methylpyrazol zugibt, mit der ein Gewichtsverhältnis von 2:1 (1,2,4-Triazol:3-Methylpyrazol) erzielt wird.

10. Verfahren zur Herstellung einer Mischung nach Anspruch 8, **dadurch gekennzeichnet, dass** man Wasser vorlegt, die Säure darin löst, mit 3-Methylpyrazol neutralisiert und nacheinander unter Rühren, Polyvinylalkohol, Polyvinylpyrrolidon und 1,2,4-Triazol. zugibt, die Mischung bis zum vollständigen Lösen des Polyvinylalkohols bei Temperaturen von 40 bis 85 ° C rührt und abschließend das Tensid zugibt.

11. Verfahren zur Behandlung von harnstoffbasierten/ammoniumhaltigen Düngemitteln, **dadurch gekennzeichnet, dass** man das harnstoffbasierte/ammonumhaltige Düngemittel bei Umgebungstemperatur in einem Mischer mit 0,1 bis 0,9 % einer Mischung nach den Ansprüchen 1 bis 8 besprüht.

## Claims

1. Aqueous solution of a mixture for treating fertilisers which are urea-based and/or contain ammonium, such mixture containing 1,2,4-triazole and 3-methylpyrazole in a weight ratio of 2/1 and at least one polyvinyl alcohol, polyvinylpyrrolidone, and a surfactant.

2. Aqueous solution of a mixture according to claim 1, wherein the polyvinyl alcohol has a degree of hydrolysis of at least 90% and the viscosity of the 4% aqueous solution is 2 to 5 mPas.

3. Aqueous solution of a mixture according to claim 2, wherein the polyvinyl alcohol has a degree of hydrolysis of at least 95% and the viscosity of the 4% aqueous solution is 2 to 4 mPas.

4. Aqueous solution of a mixture according to any one of the preceding claims, wherein the polyvinylpyrrolidone has a molecular weight in the range from 2,000 to 40,000 g/mol.

5. Aqueous solution of a mixture according to any one of the preceding claims, wherein the surfactant is an ester of a fatty acid selected from lauric, palmitic, stearic and oleic acid with polyoxyethylenesorbitan.

6. Aqueous solution of a mixture according to any one of the preceding claims, wherein the concentration of the nitrification inhibitors combination of 1,2,4-triazole and 3-methylpyrazole in the weight ratio 2/1 is in the range of 20 to 55 percent by weight.

7. Aqueous solution of a mixture according to any one of the preceding claims, wherein the concentration of the polyvinyl alcohol lies in the range of 5 to 20 percent by weight, that of the polyvinylpyrrolidone in the range from 0.1 to 5 percent by weight and that of the surfactant in the range of 0.1 to 3 percent by weight.

8. Aqueous solution of a mixture according to any one of the preceding claims, wherein the 3-methylpyrazole is used in the form of a salt with a mineral acid or an organic acid.

9. A process for preparing a mixture according to claims 1 to 7, **characterised in that** initially water is introduced, and, while stirring, surfactant, polyvinyl alcohol, polyvinyl pyrrolidone and 1,2,4-triazole are successively added, the mixture then stirred at a temperature of 40 to 85°C until complete dissolution of the polyvinyl alcohol is achieved and, after cooling to 20 to 30°C, the amount of 3-methylpyrazole is added with which a weight ratio of 2:1 (1,2,4-triazole: 3-methylpyrazole) is achieved.

10. A process for preparing a mixture according to claim 8, **characterised in that** water is initially introduced, the acid dissolved therein, neutralised with 3-methylpyrazole, and, while stirring, polyvinyl alcohol, polyvinyl pyrrolidone and 1,2,4-triazole are successively added and the mixture stirred at a temperature of 40 to 85°C until complete dissolution of the polyvinyl alcohol is achieved, and the surfactant is added at the end.

11. A method for the treatment of fertilisers which are urea-based and/or contain ammonium, **characterised in that** the fertiliser which is urea-based and/or contains ammonium is sprayed at ambient temperatures in a mixer with 0.1 to 0.9% of a mixture according to claims 1 to 8.

## Revendications

1. Solution aqueuse d'un mélange pour le traitement d'engrais à base d'urée à teneur en ammoniac contenant du triazole 1,2,4 et du méthylpyrazol 3 dans une proportion de 2/1 ainsi qu'au moins un alcool polyvinyle, une pyrrolidone polyvinyle et un agent tensioactif.

2. Solution aqueuse d'un mélange conforme à la revendication 1, où l'alcool polyvinyle présente un degré d'hydrolyse d'au moins 90 %, et où la viscosité de la solution aqueuse à 4 % atteint 2 à 5 mPas.

3. Solution aqueuse d'un mélange conforme à la revendication 2, où l'alcool polyvinyle présente un degré d'hydrolyse d'au moins 95 %, et où la viscosité de la solution aqueuse à 4 % atteint 2 à 4 mPas.

4. Solution aqueuse d'un mélange conforme à l'une des revendications ci-dessus, où la pyrrolidone polyvinyle présente une masse moléculaire comprise entre 2 000 à 40 000 g/mol.

5. Solution aqueuse d'un mélange conforme à l'une des revendications ci-dessus, où un ester d'un acide gras laurique, palmitique, stéarique ou oléique avec de la polyoxyéthylensorbitane est utilisé comme agent tensioactif.

6. Solution aqueuse d'un mélange conforme à l'une des revendications ci-dessus, où la concentration de la combinaison des inhibiteurs de nitrification triazole 1,2,4 et méthylpyrazol 3 se situe dans un rapport de 2/1 entre 20 et 55 % de la masse.

7. Solution aqueuse d'un mélange conforme à l'une des revendications ci-dessus, où la concentration d'alcool polyvinyle se situe dans une fourchette de 5 à 20 M de la masse, celle de la pyrrolidone polyvinyle est comprise entre 0,1 et 5 % de la masse, et celle de l'agent tensioactif entre 0,1 et 3 % de la masse.

8. Solution aqueuse d'un mélange conforme à l'une des revendications ci-dessus, où le méthylpyrazol 3 est utilisé sous la forme d'un sel contenant un acide minéral ou un acide organique.

9. Procédé de fabrication d'un mélange conforme aux revendications 1 à 7, **caractérisé par le fait que** l'on apporte de l'eau, que l'on ajoute successivement un agent tensioactif, de l'alcool polyvinyle, de la pyrrolidone polyvinyle et du triazol 1,2,4 en remuant, que l'on agite le mélange jusqu'à la dissolution complète de l'alcool polyvinyle à des températures de 40 à 85 °C, et que l'on ajoute, après le refroidissement à une température comprise entre 20 et 30 °C la quantité de méthylpyrazol 3 avec laquelle on obtient une proportion de 2:1 (triazol 1,2,4:méthylpyrazol 3).

10. Procédé de fabrication d'un mélange conforme à la revendication 8, **caractérisé par le fait que** l'on apporte de l'eau, que l'on y dissout l'acide, qu'on le neutralise avec du méthylpyrazol 3, puis que l'on ajoute l'un après l'autre en remuant de l'alcool polyvinyle, de la pyrrolidone polyvinyle et du triazol 1,2,4, que l'on agite le mélange jusqu'à la dissolution complète de l'alcool polyvinyle à des températures comprises entre 40 et 85 °C, et que l'on ajoute enfin l'agent tensioactif.

11. Procédé de traitement d'engrais à base d'urée/ammoniac, **caractérisé par** le fait aue l'on pulvérise cet engrais à la température ambiante dans un mélangeur avec 0,1 à 0,9 % d'un mélange conforme aux revendications 1 à 8.
